Europäisches Patentamt

European Patent Office

Office européen des brevets

(19)

(11) Veröffentlichungsnummer: **0 136 466**

**A1**

(12) ## EUROPÄISCHE PATENTANMELDUNG

(21) Anmeldenummer: **84109155.6**

(22) Anmeldetag: **02.08.84**

(51) Int. Cl.⁴: **G 01 L 1/12**

(30) Priorität: **05.09.83 DE 3331986**

(43) Veröffentlichungstag der Anmeldung:
**10.04.85 Patentblatt 85/15**

(84) Benannte Vertragsstaaten:
**DE FR GB IT**

(71) Anmelder: **ROBERT BOSCH GMBH**
**Postfach 50**
**D-7000 Stuttgart 1(DE)**

(72) Erfinder: **Schwerin, Günther**
**Hohenstaufenstrasse 15**
**D-7141 Möglingen(DE)**

(54) **Magnetoelastischer Kraftmesser zur Messung von Schubspannungen.**

(57) Es wird ein magnetoelastischer Kraftmesser (10) zur Messung von Schubspannungen vorgeschlagen, bei dem auf einem rohrförmigen Bolzen (11) aus ferromagnetischem Material ein Maschinenelement (16) zwischen zwei Lagerstellen (17, 18) schwenkbar angelenkt ist und der in seinem Innern je eine Meßstelle (21, 22) zwischen der Krafteinleitungsstelle (19) und jeder Lagerstelle (17, 18) aufweist. Die Summe der Signale beider Meßstellen ist ein Maß für die zu messende Kraft im Maschinenelement (16). Axiale Abstandsänderungen des Maschinenelements (16) relativ zu den Lagerstellen (14, 15) und damit verbundene Änderungen der Querkräfte und Schubspannungen infolge von Teleranzen oder Verformungen stören die Genauigkeit der Kraftmessung nicht, da stets die Summe der Querkräfte bzw. deren Spannungen und somit die gesamte, vom Maschinenelement (16) eingeleitete Kraft ermittelt wird.

FIG. 1

EP 0 136 466 A1

R.
30.8.1983 My/Hm

0136466

ROBERT BOSCH GMBH, 7000 STUTTGART 1

Magnetoelastischer Kraftmesser zur Messung von
Schubspannungen

Stand der Technik

Die Erfindung geht aus von einem magnetoelastischen Kraftmesser zur Messung von Schubspannungen nach der Gattung
des Hauptanspruchs. Es ist schon ein solcher Kraftmesser
aus der DE-OS 30 04 592 bekannt, bei dem der als Bolzen
ausgebildete Kraftmesser beidseitig gelagert ist und ein
die zu messende Kraft übertragender Lenker zwischen den
beiden Lagerstellen am Kraftmeßbolzen angreift. Hierbei
arbeitet der Kraftmesser mit einer einzigen Meßstelle,
die im Bereich zwischen der Krafteinleitungsstelle am Lenker und einer der beiden Lagerstellen liegt, um abhängig
von der in diesem Bereich herrschenden Querkraft die
Schubspannung im ferromagnetischen Material des Kraftmeßbolzens zu ermitteln und daraus Rückschlüsse auf die
Größe der Kraft im Lenker herzuleiten. Durch die in der
Praxis relativ grob ausgebildete Lagerung treten insbesondere axiale Spiele und Toleranzen auf, die zu einer
Änderung des Abstands zwischen der Krafteinleitungsstelle

...

und der einen Lagerstelle führen können. Bei einer beidseitigen Lagerung des Kraftmeßbolzens führen solche axialen Abstandsänderungen zu Querkraftänderungen und damit zu unerwünschten Meßsignaländerungen bei gleichbleibender Kraft im Lenker. Auch Verformungen im Bereich der Lenkerlagerung oder unregelmäßige Flächenlasten im Bereich der Krafteinleitungsstelle oder der Lagerstellen können diese unerwünschte Erscheinung noch verstärken. Es können dadurch unerwünschte Meßwertschwankungen auftreten, die eine genaue und proportionale Ermittlung der Kraft im Unterlenker beeinträchtigen und seine genaue Arbeitsweise als Istwertgeber in einer elektrohydraulischen Hubwerksregeleinrichtung stören können.

Ferner ist aus der US-PS 3 903 739 ein magnetoelastischer Umformer bekannt, der neben einer Meßwicklung eine zweite Kompensationswicklung aufweist. Bei diesem Umformer arbeiten die beiden Wicklungen, die in einer bestimmten Weise zueinander angeordnet sind, so zusammen, daß die Hysterese des Umformers möglichst kompensiert wird.

Vorteile der Erfindung

Der erfindungsgemäße Kraftmesser mit den kennzeichnenden Merkmalen des Hauptanspruchs hat demgegenüber den Vorteil, daß er durch Kompensation von Toleranzeinflüssen eine genaue und proportionale Kraftmessung ermöglicht. Insbesondere sind axiale Abstandsänderungen zwischen der Krafteinleitungsstelle und den Lagerstellen, Durchbiegungen des schubbelasteten Bauelements sowie unregelmäßige Flächenlasten im Bereich der Kraftübertragungsflächen ohne Einfluß auf die Genauigkeit der Kraftmessung. Der Kraftmesser ermittelt vielmehr stets die Summe der Querkräfte in

...

beiden Lagerstellen des balkenartigen Bauelements und damit
die gesamte eingeleitete Kraft auf den beidseitig gelagerten Kraftmesser. Zudem ermöglicht der Kraftmesser eine
größere Signalausbeute. Seine ihm eigenen Vorteile werden weitgehend beibehalten.

Durch die in den Unteransprüchen aufgeführten Maßnahmen
sind vorteilhafte Weiterbildungen und Verbesserungen des
im Hauptanspruch angegebenen Kraftmessers möglich. Besonders vorteilhaft ist seine Verwendung als Istwertgeber
im Zusammenhang mit einer elektrohydraulischen Hubwerksregeleinrichtung.

Zeichnung

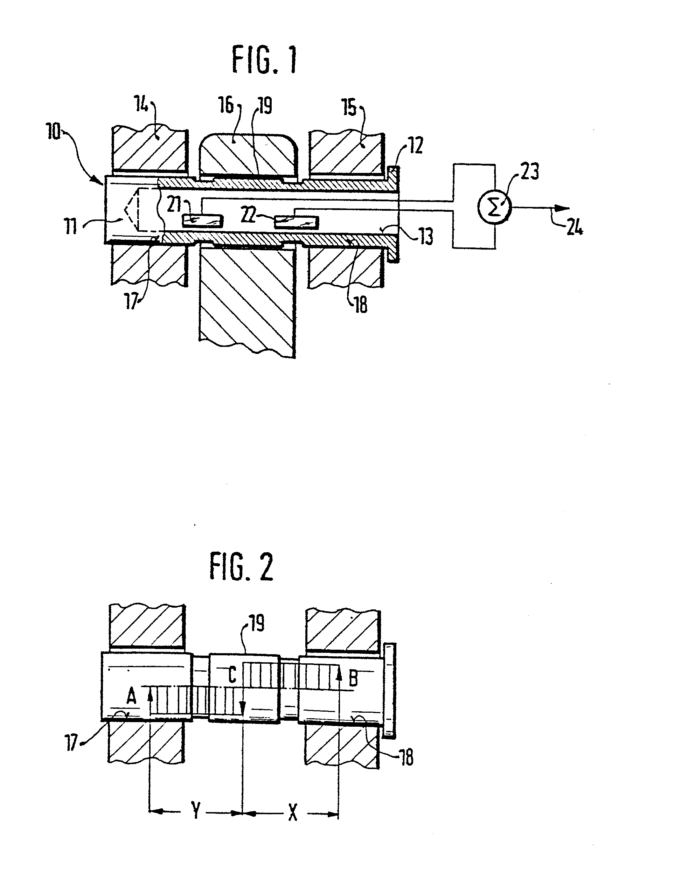

Ein Ausführungsbeispiel der Erfindung ist in der Zeichnung dargestellt und in der nachfolgenden Beschreibung
näher erläutert. Es zeigen Figur 1 einen Längsschnitt
durch einen magnetoelastischen Kraftmesser in vereinfachter Darstellung und Figur 2 den Querkraftverlauf im
hohlen Bolzen des Kraftmessers.

Beschreibung des Ausführungsbeispiels

Die Figur 1 zeigt einen Kraftmesser 10, der als balkenartiges, hohles Bauelement einen Bolzen 11 aufweist, in
dem von einem Bund 12 her eine Sacklochbohrung 13 eingebracht ist. Der Bolzen 11 besteht aus weichmagnetischem
Material. Der Bolzen 11 ist in zwei voneinander im Abstand befindlichen Augen 14, 15 eines nicht näher gezeichneten Traktorgehäuses eingesteckt und somit beidseitig gelagert. Zwischen den beiden Augen 14, 15 ist auf
dem Bolzen 11 ein Lenker 16 schwenkbar gelagert, der Teil

...

eines nicht näher gezeichneten Dreipunktgestänges des Traktors ist. Auf diese Weise bilden die Augen 14 und 15 eine erste (17) bzw. zweite Lagerstelle 18, während der Lenker 16 die Krafteinleitungsstelle 19 bildet.

In der Sacklochbohrung 13 ist im Bereich zwischen der ersten Lagerstelle 17 und der Krafteinleitungsstelle 19 eine erste Meßstelle 21 ausgebildet. Diese Meßstelle 21 besteht aus elektrischen Primär- und Sekundärspulen, deren Anordnung und Wirkungsweise aus dem eingangs erwähnten Stand der Technik an sich bekannt ist. In entsprechender Weise befindet sich im Bereich zwischen der zweiten Lagerstelle 18 und der Krafteinleitungsstelle 19 eine zweite Meßstelle 22 in der Sacklochbohrung 13, die in gleicher Weise wie die erste Meßstelle 21 ausgebildet ist. Die Ausgangssignale beider Meßstellen 21, 22 werden im Punkt 23 summiert und ergeben am Ausgang 24 ein elektrisches Ausgangssignal des Kraftmessers 10.

Mit den Meßstellen 21, 22 werden in den zugeordneten Wandabschnitten des Bolzens 11 die Schubspannungen gemessen. Diese Schubspannungen werden von der Querkraft verursacht, deren Verlauf nun in Figur 2 dargestellt ist. Im Bereich der Krafteinleitungsstelle 19 übt der Lenker 16 auf den Bolzen 11 eine Kraft C aus, die in Figur 2 als Resultierende dargestellt ist. Die Größe dieser Kraft C soll vom magnetoelastischen Kraftmesser 10 ermittelt werden. Entsprechend der beidseitigen Lagerung des Bolzens teilt sich diese eingeleitete Kraft C auf in eine Kraft A in der ersten Lagerstelle 17 sowie in eine Kraft B in der zweiten Lagerstelle 18. Wie aus dem Querkraftdiagramm nach Figur 2 hervorgeht, ist die Summe der Kräfte A und B in den Lagerstellen 17, 18 stets gleich groß wie die Kraft C in der Krafteinleitungs-

...

stelle 19. Sind die Abstände x, y der Kraft C in der
Krafteinleitungsstelle 19 von den Kräften A, B in den
Lagerstellen 17 bzw. 18 untereinander gleich groß, so
sind auch die Kräfte A, B gleich groß. Sind jedoch die
Abstände x, y ungleich, so sind auch die entsprechenden Kräfte A, B in den Lagerstellen ungleich.

Die Wirkungsweise des magnetoelastischen Kraftmessers
10 wird wie folgt erläutert, wobei dessen grundsätzliche
Funktion aus der eingangs erwähnten DE-OS 30 04 592 als
an sich bekannt vorausgesetzt wird.

Der als Transformatorgeber arbeitende Kraftmesser 10 erzeugt am Ausgang 24 eine elektrisches Ausgangssignal,
das proportional ist zur Größe der im Lenker 16 wirkenden Kraft, wobei nur deren senkrecht zur Längsachse des
Kraftmessers 10 verlaufender Anteil ermittelt wird. Mit
der ersten Meßstelle 21 wird die Schubspannung im Bolzen
11 im Bereich zwischen der ersten Lagerstelle 17 und der
Krafteinleitungsstelle 19 ermittelt, wobei die Größe
dieser Schubspannung von der Größe der Querkraft A abhängt. Zugleich ermittelt die zweite Meßstelle 22 die
Schubspannung im Bolzen 11 im Bereich zwischen der
zweiten Lagerstelle 18 und der Krafteinleitungsstelle
19, deren Größe von der Querkraft B abhängt. Die Ausgangssignale beider Meßstellen 21, 22 werden im Punkt
23 summiert und ergeben im Ausgang 24 ein elektrisches
Signal, dessen Größe der über den Lenker 16 eingeleiteten Kraft C entspricht. Schwankungen der Abstände x, y,
wie sie in der Praxis immer wieder auftreten, haben nun
keinen Einfluß mehr auf das Meßergebnis im Ausgang 24.
Wirkt nämlich die eingeleitete Kraft C außermittig , wobei der Abstand x kleiner und der Abstand y größer wird,
so wird dementsprechend die Querkraft B größer und die
Querkraft A kleiner. Dementsprechend mißt die zweite

...

Meßstelle 22 eine größere Schubspannung, während von der ersten Meßstelle 21 ein kleineres Ausgangssignal kommt. Die Summe der Signale beider Meßstellen 21, 22 bleibt jedoch bei gleichbleibender Kraft C gleich groß. Solche Schwankungen der Abstände x, y können bereits bei grober Ausführung der Lagerung auftreten, da der Lenker 16 zwischen den Augen 14, 15 ein begrenztes Spiel aufweist. Selbst wenn der Einfluß der Toleranzen auf die Meßgenauigkeit durch eine feine Ausführung der Lagerung vermindert wird, können noch Verformungen des Bolzens 11 auftreten. Auch derartige Verformungen können die Genauigkeit des Meßergebnisses nicht beeinflussen, da stets die Summe der Kräfte A und B ermittelt wird. Auch die wirkliche Beschaffenheit der Kräfte A, B, C, die in Figur 2 lediglich als Resultierende aufgefaßt sind, haben nun keinen Einfluß auf die Genauigkeit des Meßergebnisses, so daß z.B. der störende Einfluß von unregelmäßigen Flächenlasten ausgeschaltet ist. Die zweite Meßstelle 22 ergibt bei dem als Bolzen ausgebildeten Kraftmesser 10 nicht nur eine Kompensation gegenüber störenden Einflüssen infolge von z.B. Längsspiel, sondern ermöglicht zudem auch eine größere Signalausbeute.

Selbstverständlich sind an der gezeigten Bauart Änderungen möglich, ohne vom Gedanken der Erfindung abzuweichen. Äußerst vorteilhaft ist seine Verwendung im Zusammenhang mit einer elektrohydraulischen Hubwerks-Regeleinrichtung bei einem Traktor oder einem ähnlichen Arbeitsfahrzeug, wobei die bisherigen Vorteile des Kraftmeßbolzens weitestgehend beibehalten werden können.

R. 10029

30.8.1983 My/Hm

0136466

ROBERT BOSCH GMBH, 7000 STUTTGART 1


Ansprüche

1. Magnetoelastischer Kraftmesser zur Messung von Schubspannungen in einem balkenartigen, hohlen Bauelement, das aus ferromagnetischem Material besteht und in seinem Innern elektrische Spulen mit zugeordneten Kernen aufweist, die von der zu messenden Kraft einen senkrecht zur Längsachse des balkenartigen Bauelements verlaufenden Anteil in einer ersten Meßstelle ermitteln, die bei dem beidseitig gelagerten Bauelement im Bereich zwischen der Krafteinleitungsstelle und der einen Lagerstelle liegt, dadurch gekennzeichnet, daß der Kraftmesser (10) eine zweite Meßstelle (22) im Bereich zwischen Krafteinleitungsstelle (19) und der anderen Lagerstelle (18) aufweist und daß beide Meßstellen (21, 22) in einer ihre Signale summierenden Weise zusammengeschaltet sind, so daß das Signal am Ausgang (24) des Kraftmessers (10) ein Maß für die Summe der Querkräfte in beiden Lagerstellen (17, 18) ist.

2. Kraftmesser nach Anspruch 1, dadurch gekennzeichnet, daß die Primär- und Sekundärspulen beider Meßstellen (21, 22) im Innern (13) des als Bolzen (11) ausgebildeten Bauelements angeordnet sind.

...

3. Kraftmesser nach einem der Ansprüche 1 oder 2, dadurch gekennzeichnet, daß die Meßstellen (21, 22) mindestens nahezu symmetrisch zur Krafteinleitungsstelle (19) liegen.

4. Kraftmesser nach einem der Ansprüche 1 bis 3, gekennzeichnet durch seine Verwendung als Istwertgeber in einer elektrohydraulischen Steuereinrichtung zum Steuern eines Hubwerks an landwirtschaftlichen Arbeitsfahrzeugen, wobei mit ihm ein heb- und senkbarer Lenker an einem gehäusefesten Bauelement des Fahrzeugs schwenkbar angelenkt ist.

# FIG. 1

14  16  19  15
10  12  23
11  21  22  13  24
17  18

# FIG. 2

19
C  B
A
17  18
Y  X

Europäisches
Patentamt

**EUROPÄISCHER RECHERCHENBERICHT**

Q136466

EP 84 10 9155

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | DE-A-3 004 592 (R. BOSCH GMBH)<br>--- | 1-4 | G 01 L 1/12 |
| D,A | US-A-3 903 739 (P. KOLAVCIC)<br>--- | | |
| A | CH-A- 565 365 (CENTRE D'ETUDES ET DE RECHERCHES DE LA MACHINE-OUTIL)<br>----- | | |

**RECHERCHIERTE SACHGEBIETE (Int. Cl.4)**

G 01 L 1/12

Der vorliegende Recherchenbericht wurde für alle Patentansprüche erstellt.

| Recherchenort | Abschlußdatum der Recherche | Prüfer |
|---|---|---|
| BERLIN | 27-11-1984 | KOEHN G |